# FASCICULE DE BREVET EUROPEEN

(11) **EP 1 041 876 B1**
(45) Date de publication et mention de la délivrance du brevet: **02.05.2003**
(21) Numéro de dépôt: 98963604.8
(22) Date de dépôt: 23.12.1998
(51) Int. Cl.: A01K 63/02

(54) **CONDITIONNEMENT POUR LE TRANSPORT EN EMERSION DE POISSONS VIVANTS DE L'ORDRE DES PLEURONECTIFORMES**
VERPACKUNGSBEHÄLTER ZUM TROCKENTRANSPORT VON LEBENDEN PLATTFISCHEN
PACKAGING FOR TRANSPORTING IN EMERGENCE LIVING FISH OF THE PLEURONECTIFORM SPECIES

(30) Priorité: 24.12.1997 FR 9716520
(43) Date de publication de la demande: 11.10.2000
(73) Titulaire: France Turbot, 85330 Noirmoutier en l'Ile (FR)
(72) Inventeur: JUSTOME, Bruno, F-56690 Landevant (FR)
(74) Mandataire: Laget, Jean-Loup
(86) Numéro de dépôt international: FR9802844
(87) Numéro de publication internationale: WO99033336

(56) Documents cités:
- DE-B- 1 153 935
- FR-A- 2 215 894
- FR-A- 2 382 861
- GB-A- 2 265 289
- PATENT ABSTRACTS OF JAPAN vol. 96, no. 9, 30 septembre 1996 & JP 08 119361 A (YONEDA TAKEO), 14 mai 1996
- PATENT ABSTRACTS OF JAPAN vol. 16, no. 54 (C-0909), 12 février 1992 & JP 03 254619 A (AARUU PII TOUPURA KK), 13 novembre 1991

## Description

La présente invention concerne un conditionnement et un procédé de conditionnement pour le transport en émersion de poissons vivants de l'ordre des pleuronectiformes.

De nombreuses espèces de poissons sont actuellement transportées vivantes et sans eau dans le monde entier. C'est le cas par exemple de l'esturgeon (*Acipenser sturio*) et de la carpe (*Cyprinus carpio*) qui ont une capacité naturelle à survivre très longtemps (2 à 3 jours) hors de l'eau. De même, le homard, du fait de sa capacité naturelle à survivre hors de l'eau, peut être expédié au départ des côtes canadiennes jusqu'au Japon dans de simples caisses en polystyrène contenant uniquement de la glace.

Comme le décrit le document FR-A-2.215.894, on connaît par ailleurs des emballages destinés au transport et à la conservation de petits animaux tels que des crevettes dans lesquels on utilise une quantité d'eau réduite. Dans ce cas, l'emballage se présente sous forme d'une plaque perforée, logée à l'intérieur d'un emballage à fond étanche, les perforations de la plaque permettant à l'eau sous les animaux de s'échapper pour que seul reste un mince film d'eau autour des animaux aquatiques. Le transport s'opère donc dans des conditions où un mince film d'eau est maintenu autour et au-dessus des animaux disposés sous forme d'une couche. La présence d'eau génère un certain nombre de problèmes dans le cas d'un transport aérien. Par ailleurs, une telle solution est difficile à mettre en oeuvre en raison de l'absence de maîtrise des caractéristiques du film d'eau.

D'autres solutions consistent à réaliser une boîte généralement en plastique à l'intérieur de laquelle un poisson est logé. Cette boîte formée d'un corps et d'un couvercle est munie d'orifices de passage de l'eau. L'ensemble est alors placé dans un conteneur rempli d'eau. La boite permet de protéger le poisson pendant son transport. Une telle solution est notamment décrite dans le document JP-03.254.619.

Par ailleurs, il a été démontré qu'une préparation adéquate de ces poissons vivants avant le transport pouvait améliorer considérablement leur durée de vie hors de l'eau. Ainsi, il a été démontré que ces esturgeons pouvaient être maintenus en vie en émersion pendant plusieurs semaines si l'on amenait leur température au-dessous de 0°C. Ce phénomène bien connu est appelé phénomène d'anabiose.

De ce fait, des machines de refroidissement spéciales s'appuyant sur ce phénomène d'anabiose ont été développées. Ces machines sont installées directement à l'intérieur des avions. Le problème de telles installations est leur coût, leur encombrement et leur maintenance.

Jusqu'à présent, aucun conditionnement n'a pu être proposé pour le transport d'espèces de poissons naturellement moins résistantes à la survie en émersion, comme cela est le cas pour les poissons plats encore appelés pleuronectiformes.

Le but de la présente invention est donc de proposer un conditionnement pour le transport en émersion de poissons vivants de l'ordre des pleuronectiformes de conception simple, de coût réduit et aisé à préparer et à charger dans un avion en limitant au maximum les manipulations des poissons.

Un autre but de la présente invention est de proposer un conditionnement pour le transport en émersion des poissons de l'ordre des pleuronectiformes qui permet d'obtenir un taux de survie de 100 % desdits poissons après au moins 24 heures en émersion.

Un autre but de la présente invention est de proposer un procédé de conditionnement de poissons vivants de l'ordre des pleuronectiformes incluant une suite d'étapes simples à mettre en oeuvre et impliquant peu de manipulations par contact direct avec les poissons.

A cet effet, l'invention a pour objet un conditionnement pour le transport en émersion de poissons vivants de l'ordre des pleuronectiformes, caractérisé en ce qu'il est constitué d'au moins une caisse à ouverture par le dessus et dont le fond est pourvu d'une surface active de réception à plat du ou des poissons à conditionner, cette surface active d'appui du ou des poisson(s) étant constituée de pleins et de vides ventilés, le rapport (surface des pleins/surface des vides) de ladite surface active d'appui étant compris dans la plage [0,11-9] pour autoriser une respiration cutanée efficace de la face d'appui du ou des poissons.

Grâce à cette conception du conditionnement, les poissons transportés ne comportent aucun marquage cutané après leur transport et présentent un taux de survie proche de 100 % y compris après un temps de transport supérieur à 24 heures.

Selon une forme de réalisation préférée de l'invention, le volume de la caisse exprimé en litres divisé par 6 fois le poids total exprimé en kg du ou des poissons à conditionner est compris entre 0,4 et 2,5. Par ailleurs, la surface active d'appui du ou des poissons peut être constituée par le sommet de plots faisant saillie de la face formant fond de la caisse en direction de la face du dessus de la caisse, les vides correspondant aux espaces laissés libres entre lesdits plots.

L'invention a encore pour objet un procédé de conditionnement de poissons vivants de l'ordre des pleuronectiformes en vue de leur transport en émersion au moyen d'un conditionnement du type précité caractérisé en ce qu'on dispose à plat, sur le fond d'une caisse chargée en glace, au moins un, de préférence deux, poissons généralement à jeun, en ce qu'on place sur le fond d'un conteneur porté par une palette une enveloppe souple étanche à l'eau, en ce qu'on dispose à l'intérieur de ladite enveloppe une ou une pluralité de caisses disposées sous forme d'une ou plusieurs piles, en ce qu'avant ou après fermeture étanche de ladite enveloppe, on introduit dans ladite enveloppe de l'oxygène et en ce qu'on ferme le conteneur disposé autour de ladite enveloppe.

Un tel procédé réduit de manière importante les manipulations par contact direct avec le ou les poissons à conditionner, ces manipulations provoquant toujours des perturbations voire des blessures des poissons.

L'invention sera bien comprise à la lecture de la description suivante d'un exemple de réalisation, en référence aux dessins annexés dans lesquels :
la figure 1 représente une vue en perspective d'une caisse d'un conditionnement conforme à l'invention,

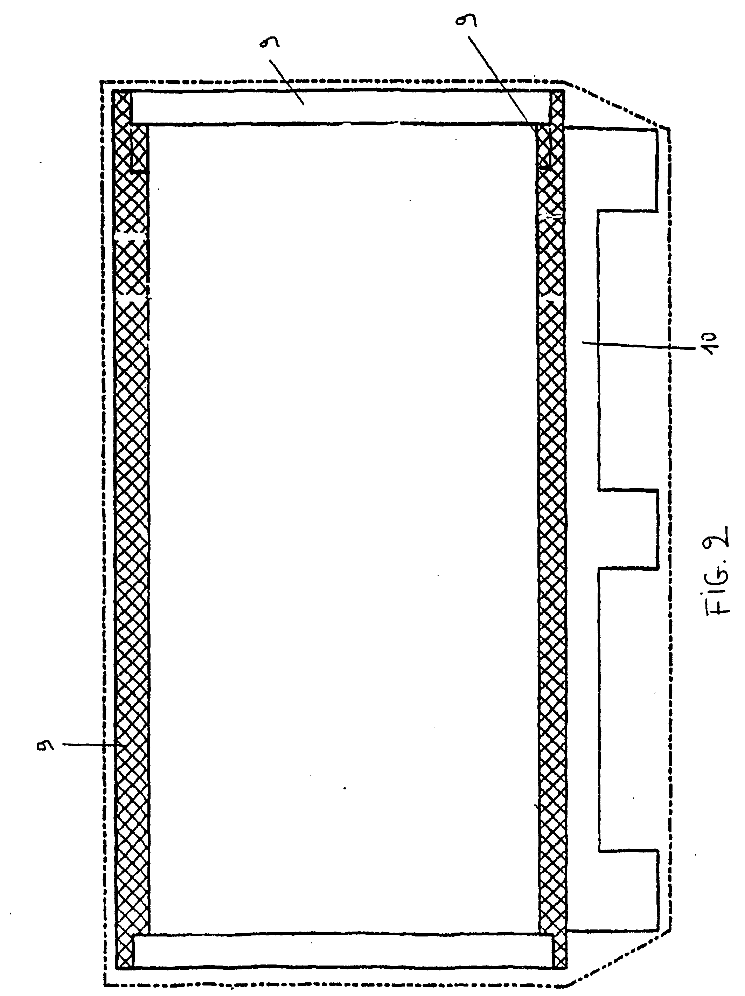

la figure 2 représente une vue de face partiellement en coupe d'un conteneur constituant l'un des éléments du conditionnement objet de l'invention.

Le conditionnement, objet de l'invention, est destiné au transport en émersion de poissons vivants de l'ordre des pleuronectiformes. Des essais de l'efficacité de ce conditionnement ont en particulier été réalisés sur le turbot.

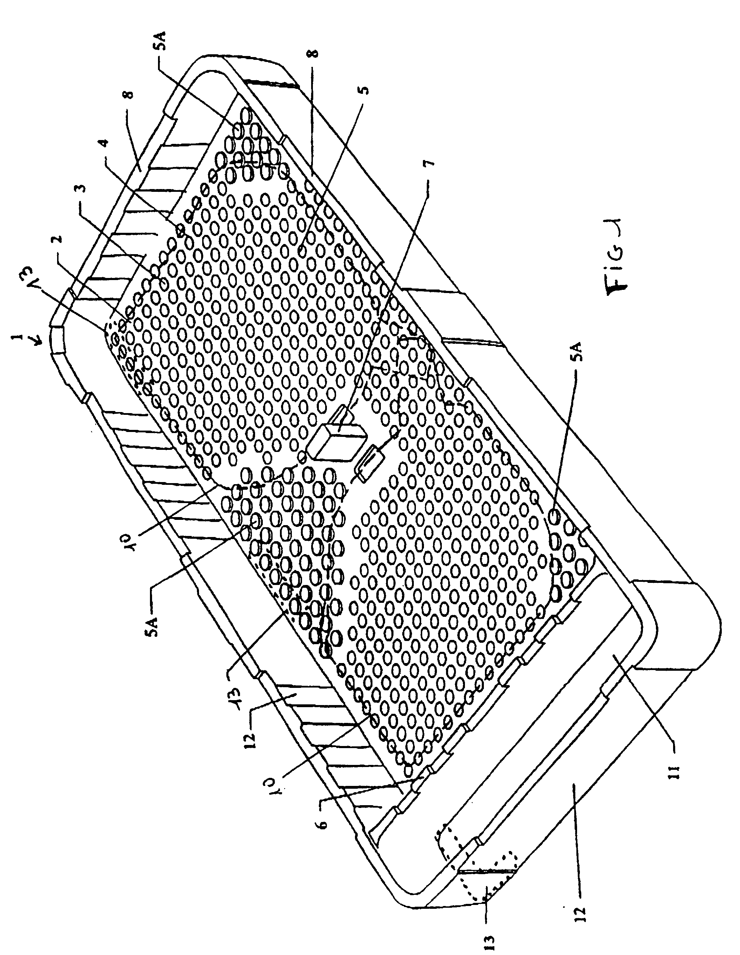

Ce conditionnement est constitué d'au moins une caisse 1 du type de celle représentée par exemple à la figure 1. Cette caisse 1 est généralement réalisée en polystyrène bien que tout autre matériau puisse être utilisé. Le polystyrène est préféré pour sa légèreté et son faible coût ainsi que ses capacités d'isolation thermique. Cette caisse, de forme générale parallélépipédique, est ouverte sur sa face du dessus pour permettre l'introduction à l'intérieur du ou des poissons à conditionner. Le positionnement des poissons à l'intérieur de la caisse est représenté en pointillé 10 à la figure 1.

Le fond de cette caisse 1 est pourvu d'une surface active 2 de réception à plat du ou des poissons à conditionner. Cette surface active 2 d'appui du ou des poissons est constituée de pleins 3 et de vides 4 ventilés. Par vides ventilés, on entend des vides dont l'atmosphère peut être renouvelée, en particulier du fait de leur communication avec le reste du volume de la caisse ou avec l'atmosphère extérieure à la caisse.

Le rapport surface des pleins 3/surface des vides 4 de cette surface active 2 d'appui est particulièrement important car il empêche ou autorise une respiration cutanée du poisson. En effet, les pleuronectiformes se distinguent des autres groupes de poissons par une face oculifère colorée avec des yeux et une face aveugle presque toujours incolore. Cette face oculifère et cette face aveugle couvrent par exemple chez le turbot à peu près 30 % des besoins respiratoires du poisson du fait de l'aptitude de ces faces à des échanges gazeux cutanés. Le transport en émersion de ces poissons nécessite donc de placer ces poissons dans des conditions permettant cette respiration cutanée.

La surface active 2 d'appui de la caisse 1 ne doit pas être agressive à l'égar du poisson et en particulier ne doit pas marquer ce dernier.

Pour toutes les raisons précitées, ce rapport surface des pleins 3/surface des vides 4 de la surface active 2 d'appui est compris dans la plage [0,11-9] et de préférence compris entre 0,25 et 4. Le non respect de ce rapport ne permet pas d'obtenir des taux de survie compatibles avec les impératifs économiques ou des temps de survie suffisants pour permettre un transport d'Europe en Asie par exemple.

Cette surface active 2 d'appui du ou des poissons peut affecter un grand nombre de formes.

Selon un mode de réalisation préféré de cette surface d'appui active 2 du ou des poissons représenté à la figure 1, cette surface 2 est constituée par le sommet de plots 5,5A faisant saillie de la face formant fond de la caisse en direction de la face du dessus de la caisse, les vides 4 correspondant aux espaces laissés libres entre lesdits plots 5,5A. Dans l'exemple représenté à la figure 1, les plots 5 présentent une hauteur de 7 mm et un diamètre de 8 mm avec un rapport surface des pleins/surface des vides égal à 0,3 et les plots 5A présentent une hauteur de 12 mm, un diamètre de 10 mm avec un rapport égal à nouveau à 0,3.

Il est bien entendu que cette surface active d'appui du ou des poisson(s) peut être réalisée d'une seule pièce avec le fond de la caisse ou être constituée au moyen d'une pièce rapportée.

Dans le cas d'une surface active d'appui réalisée à partir de plots, au moins une partie 5A des plots de la caisse présente une hauteur supérieure au reste des plots de ladite caisse. Cette différence de hauteur est représentée par les plots 5A en gras à la figure 1. Ces plots de hauteur supérieure sont plus particulièrement disposés dans la zone d'appui des nageoires du ou des poissons à conditionner. En ces emplacements, la respiration cutanée des poissons n'est pas aussi importante que sur leurs faces oculifère et aveugle. Le fait de relever les nageoires du poisson facilite la circulation d'air au niveau du reste de la surface active 2 d'appui de ladite caisse.

Par ailleurs, la caisse 1 comporte sur son bord supérieur des échancrures 8 pour une circulation horizontale du gaz entre les caisses lorsque celles-ci sont disposées à l'état empilé. Elle comporte également sur au moins une face interne et/ou externe de l'une de ses parois latérales des rainures 12 verticales pour faciliter à nouveau la circulation de l'air dans ladite caisse 1. Dans l'exemple représenté à la figure 1, la caisse comporte sur toutes les faces externes et sur deux faces internes de ses parois latérales des rainures 12. Les rainures latérales extérieures permettent la circulation verticale du gaz entre les caisses à l'état empilé tandis que les rainures latérales intérieures permettent une circulation verticale du gaz à l'intérieur de la caisse.

Le volume de gaz disponible à l'intérieur de la caisse doit être présent en quantité suffisante. Pour cette raison, le volume de la caisse exprimé en litres divisé par 6 fois le poids total exprimé en kg du ou des poissons à conditionner est compris entre 0,4 et 2,5.

Enfin, chaque caisse 1 est munie intérieurement d'une cloison 6 pour la délimitation d'un bac à glace 11 d'une contenance de l'ordre de 0,6 1 de glace par exemple. Cette cloison 6 présente un bord supérieur généralement crénelé, comme le montre la figure 1, pour faciliter le mélange entre l'air contenu dans le bac à glace et l'air contenu dans le reste du volume de la caisse et maintenir ainsi une température et une humidité relative appropriées à l'intérieur de la caisse 1. La hauteur de cette cloison 6 est choisie de manière à empêcher toute sortie de glace ou d'eau en dehors de ce bac à glace, y compris lors du décollage ou de l'atterrissage d'un avion.

Cette caisse 1 est généralement un conditionnement jetable à usage unique, c'est-à-dire utilisé pour un seul transport. Cette caisse est par ailleurs conformée pour pouvoir être aisément gerbée. Dans l'exemple représenté à la figure 1, cette caisse comporte sur la face externe de sa face formant fond des organes de gerbage 13 affectant la forme de plots et représentés en pointillé. Ces organes 13 sont disposés en particulier aux quatre coins de la caisse 1 et dans la zone médiane de la caisse 1 pour permettre un empilement aisé desdites caisses 1.

Cette caisse 1 est généralement dimensionnée pour ménager une surface active 2 d'appui permettant la réception à plat d'au moins deux poissons disposés côte à côte. Comme le montre la figure 1, les queues desdits poissons se chevauchent dans la partie centrale de la caisse 1. Un plot de calage 7 faisant saillie du fond de la caisse est disposé dans la partie médiane de cette dernière pour empêcher un chevauchement plus important desdits poissons. Deux logements supplémentaires sont prévus dans le fond de la caisse pour permettre une modification de la position du plot de calage 7 en fonction de la dimension des poissons. Il est à noter que la caisse 1 représentée à la figure 1 est plus particulièrement adaptée au conditionnement du turbot. Pour les autres espèces de l'ordre des pleuronectiformes, la forme de la caisse pourra subir des modifications pour s'adapter à la morphologie de chaque espèce.

Les poissons disposés suivant une diagonale à l'intérieur de la caisse sont introduits dans cette dernière après une préparation de leur organisme. Généralement, ces poissons sont laissés à jeun pendant quelques jours et la température de leur corps est abaissée.

Ce conditionnement comprend outre au moins une caisse, un suremballage (non représenté) de la ou les caisses se présentant sous forme d'une enveloppe souple renfermant la ou une pluralité de caisses empilées sous forme d'au moins une pile. Cette enveloppe est obturable de manière étanche pour maintenir à l'intérieur de ladite enveloppe une atmosphère contrôlée. Cette atmosphère est généralement fortement chargée en oxygène. On a constaté en effet que la vitalité des poissons peut être fortement augmentée en présence d'un excès d'oxygène.

Dans le cas d'un conditionnement avec plusieurs caisses 1, les caisses sont disposées à l'état empilé généralement sous forme de six piles. La hauteur des piles peut varier d'un conditionnement à un autre. Ces piles sont disposées à l'intérieur du suremballage. Ces opérations s'effectuent généralement sur le fond d'un conteneur 9 lui-même disposé sur une palette 10 comme le montre la figure 3. Par la suite, il suffit de fermer le conteneur par assemblage du reste des parois de ce conteneur au fond du conteneur et de maintenir par exemple par cerclage les parois à l'état assemblé. On obtient ainsi une palette 10 prête à être chargée au moyen d'un engin de transport approprié dans un avion. Généralement, le conteneur 9 est réalisé à partir de panneaux en polystyrène.

Dans un autre mode de réalisation, non représenté, il est possible de limiter le conditionnement à au moins une caisse et un conteneur disposés sur une palette, ledit conteneur renfermant une ou une pluralité de caisses empilées sous forme d'au moins une pile. Cette solution est moins performante que la solution dans laquelle les caisses sont suremballées.

En conséquence, pour conditionner des poissons vivants de l'ordre des pleuronectiformes en vue de leur transport en émersion on procède aux opérations suivantes : on dispose à plat, sur le fond d'une caisse 1 chargée en glace, au moins un, de préférence deux, poissons à jeun, on place sur le fond d'un conteneur 9 porté par une palette 10 une enveloppe souple étanche à l'eau, on dispose à l'intérieur de ladite enveloppe une ou une pluralité de caisses 1 disposées sous forme d'une ou plusieurs piles et, avant ou après fermeture étanche de ladite enveloppe, on introduit dans ladite enveloppe de l'oxygène, puis on ferme le conteneur 9 disposé autour de ladite enveloppe, en particulier par assemblage du reste des parois dudit conteneur. Une fois le conteneur ainsi préparé, il suffit de déplacer la palette au moyen d'un engin de transport de palettes approprié pour charger l'ensemble du conteneur dans un avion. Une fois transportés, les poissons peuvent être replacés par exemple dans un vivier avant leur consommation.

On constate par ailleurs, que l'introduction d'oxygène dans l'enveloppe permet aux poissons de retrouver après transport une vivacité identique à des poissons n'ayant pas subis de telles opérations de transport.

## Revendications

1. Conditionnement pour le transport en émersion de poissons vivants de l'ordre des pleuronectiformes,
**caractérisé en ce qu'**il est constitué d'au moins une caisse (1) à ouverture par le dessus et dont le fond est pourvu d'une surface active (2) de réception à plat du ou des poissons à conditionner, cette surface active (2) d'appui du ou des poissons étant constituée de pleins (3) et de vides (4) ventilés, les pleins (3) étant constitués par le sommet de plots (5, 5A) faisant saillie de la face formant fond de la caisse (1) en direction de la face du dessus de la caisse, les vides (4) correspondant aux espaces laissés libres entre lesdits plots (5, 5A), le rapport (surface des pleins (3)/surface des vides (4)) de ladite surface active (2) d'appui étant compris dans la plage [0,11 - 9] pour autoriser une respiration cutanée efficace de la face d'appui du ou des poissons.

2. Conditionnement pour le transport en émersion de poissons vivants selon la revendication 1,
**caractérisé en ce qu'**au moins une partie (5A) des plots de la caisse (1) présente une hauteur supérieure au reste (5) des plots de ladite caisse (1).

3. Conditionnement pour le transport en émersion de poissons vivants selon la revendication 1,
**caractérisé en ce que** le volume de la caisse exprimé en litres divisé par 6 fois le poids total exprimé en kg du ou des poissons à conditionner est compris entre 0,4 et 2,5.

4. Conditionnement pour le transport en émersion de poissons vivants selon l'une des revendications 1 à 3,
**caractérisé en ce que** la caisse (1) est munie intérieurement d'une cloison (6) pour la délimitation d'un bac à glace (11).

5. Conditionnement pour le transport en émersion de poissons vivants selon l'une des revendications 1 à 4,
**caractérisé en ce que** chaque caisse (1) est dimensionnée pour ménager une surface active (2) d'appui permettant la réception à plat d'au moins deux poissons disposés côte à côte, les queues desdits poissons se chevauchant dans la partie centrale de ladite caisse, un plot de calage (7), faisant saillie du fond de la caisse, étant disposé dans la partie médiane de cette dernière, empêchant un chevauchement total desdits poissons.

6. Conditionnement pour le transport en émersion de poissons vivants selon l'une des revendications 1 à 5,
**caractérisé en ce que** la caisse (1) comporte sur son bord supérieur des échancrures (8) et sur au moins une face interne et/ou externe de l'une de ses parois latérales des rainures verticales (12) pour faciliter la circulation de l'air dans ladite caisse (1).

7. Conditionnement pour le transport en émersion de poissons vivants selon l'une des revendications 1 à 6,
**caractérisé en ce qu'**il comprend, outre au moins une caisse, un suremballage de la ou des caisses se présentant sous forme d'une enveloppe souple renfermant la ou une pluralité de caisses empilées sous forme d'au moins une pile, cette enveloppe étant obturable de manière étanche pour maintenir à l'intérieur de ladite enveloppe une atmosphère contrôlée.

8. Conditionnement pour le transport en émersion de poissons vivants selon l'une des revendications 1 à 7,
**caractérisé en ce qu'**il comprend en outre un conteneur (9) disposé sur une palette (10), ledit conteneur (9) renfermant une ou une pluralité de caisses (1) empilées sous forme d'au moins une pile.

9. Procédé de conditionnement de poissons vivants de l'ordre des pleuronectiformes en vue de leur transport en émersion au moyen d'un conditionnement selon l'une des revendications 1 à 8,
**caractérisé en ce qu'**on dispose à plat sur le fond d'une caisse (1) chargée en glace au moins un, de préférence deux, poissons généralement à jeun, **en ce qu'**on place sur le fond d'un conteneur (9) porté par une palette (10) une enveloppe souple étanche à l'eau, **en ce qu'**on dispose à l'intérieur de ladite enveloppe une ou une pluralité de caisses (1) disposées sous forme d'une ou plusieurs piles, **en ce qu'**avant ou après fermeture étanche de ladite enveloppe, on introduit dans ladite enveloppe de l'oxygène et **en ce qu'**on ferme le conteneur (9) disposé autour de ladite enveloppe.

## Claims

1. Packaging for the transport of live fish of the pleuronectiform species without water, **characterised in that** it consists of at least one box (1), which opens at the top and the base of which is provided with an active surface (2) for flat accommodation of the fish or fishes to be packed, this active bearing surface (2) for the fish or fishes being made up of solid surfaces (3) and ventilated voids (4), the solid surfaces (3) being constituted by the top of studs (5, 5A) projecting from the face forming the base of the box (1) towards the face of the top of the box, the voids (4) corresponding to spaces left free between the said studs (5, 5A), the (surface area of the solid surfaces (3)/surface area of the voids (4)) ratio of the said active bearing surface (2) being within the range [0.11 - 9] to permit efficient cutaneous respiration of the bearing surface of the fish or fishes.

2. Packaging for the transport of live fish without water according to Claim 1, **characterised in that** at least some (5A) of the studs of the box (1) are greater in height than the remainder (5) of the studs of the said box (1).

3. Packaging for the transport of live fish without water according to Claim 1, **characterised in that** the volume of the box, expressed in litres, divided by 6 times the total weight, expressed in kg, of the fish or fishes to be packed is between 0.4 and 2.5.

4. Packaging for the transport of live fish without water according to one of Claims 1 to 3, **characterised in that** the box (1) is equipped with an interior partition (6) for delimiting an ice tray (11).

5. Packaging for the transport of live fish without water according to one of Claims 1 to 4, **characterised in that** each box (1) is sized to provide an active bearing surface (2) enabling at least two fish arranged side by side to be accommodated flat, the tails of the said fish overlapping in the central part of the said box, a wedging stud (7), projecting from the bottom of the box, being arranged in the middle part of the latter, preventing complete overlapping of the said fish.

6. Packaging for the transport of live fish without water according to one of Claims 1 to 5, **characterised in that** the box (1) has indentations (8) on its top edge and vertical grooves (12) on at least one internal and/or external surface of one of its side walls to facilitate the circulation of air in the said box (1).

7. Packaging for the transport of live fish without water according to one of Claims 1 to 6, **characterised in that** it comprises, in addition to at least one box, an outer packaging of the box or boxes, being in the form of a flexible wrapping enclosing the box or a multiplicity of boxes stacked in the form of at least one stack, it being possible to seal this wrapping tightly to maintain a controlled atmosphere inside the said wrapping.

8. Packaging for the transport of live fish without water according to one of Claims 1 to 7, **characterised in that** it also comprises a container (9) arranged on a pallet (10), the said container (9) enclosing one box or a multiplicity of boxes (1) stacked in the form of at least one stack.

9. Method for packing live fish of the pleuronectiform species with a view to their transport without water by means of a packaging according to one of Claims 1 to 8, **characterised in that** at least one, preferably two fish, generally with an empty stomach, is/are arranged flat on the base of a box (1) loaded with ice, **in that** a watertight flexible wrapping is placed on the base of a container (9) supported on a pallet (10), **in that** one box or a multiplicity of boxes (1) arranged in the form of one or several stacks is placed inside the said wrapping, **in that** oxygen is introduced into the said wrapping before or after tight closure of the said wrapping and **in that** the container (9) arranged around the said wrapping is closed.

## Patentansprüche

1. Behälter für den Trockentransport von lebenden Plattfischen,
dadurch gekenzeichnet, daß er durch wenigstens einen Kasten (1) gebildet ist, der nach oben offen ist und dessen Boden mit einer aktiven Oberfläche (2) für die Aufnahme des zu konditionierenden Fisches oder der zu konditionierenden Fische versehen ist, wobei diese aktive Oberfläche (2) zur Anlage des Fisches oder der Fische durch Vollelemente (3) und belüftete Zwischenräume (4) gebildet ist, wobei die Vollelemente (3) durch die Spitzen von Erhebungen (5, 5A) gebildet sind, die über die den Boden des Kastens (1) in Richtung auf die obere Fläche des Kastens vorstehen, wobei die Zwischenräume (4) den zwischen den genannten Erhebungen (5, 5A) freigelassenen Räumen entsprechen, wobei das Verhältnis (Fläche der Vollelemente (3)/Fläche der Zwischenräume (4) der genannten aktiven Anlagefläche (2) in dem Bereich [0,11 - 9] liegt, um eine ausreichende Hautatmung der Anlagefläche des Fisches oder der Fische zu ermöglichen.

2. Behälter für den Trockentransport von lebenden Fischen nach Anspruch 1,
dadurch gekennzeichent, daß wenigstens ein Teil (5A) der Erhebungen des Kastens eine Höhe aufweist, die größer ist als die Höhe des Restes (5) der Erhebungen des genannten Kastens (1).

3. Behälter für den Trockentransport von lebenden Fischen nach Anspruch 1,
**dadurch gekennzeichnet, daß** das Volumen des Kastens ausgedrückt in Litern geteilt durch 6 mal das Gesamtgewicht ausgedrückt in kg des zu konditionierenden Fisches oder der zu konditionierenden Fische zwischen 0,4 und 2,5 liegt.

4. Behälter für den Trockentransport von lebenden Fischen nach einem der Ansprüche 1 bis 3,
**dadurch gekennzeichnet, daß** der Kasten (1) innen mit einer Zwischenwand (6) zur Begrenzung eines Eisbehälters (11) versehen ist.

5. Behälter für den Trockentransport von lebenden Fischen nach einem der Ansprüche 1 bis 4,
**dadurch gekennzeichnet, daß** jeder Kasten (1) dimensioniert ist, um eine aktive Anlagefläche (2) zu bilden, die die flache Aufnahme von wenigstens zwei nebeneinander angeordneten Fischen zu ermöglichen, wobei sich die Schwänze der Fische in dem zentralen Teil des genannten Kastens überlappen, wobei eine Positionierungserhebung (7), die über den Boden des Kastens hervorsteht, in dem Medianbereich des letzteren angeordnet ist und eine völlige Überlappung der genannten Fische verhindert.

6. Behälter für den Trockentransport von lebenden Fischen nach einem der Ansprüche 1 bis 5,
**dadurch gekennzeichnet, daß** der Kasten (1) an seinem oberen Rand Aussparungen (8) und an wenigstens einer inneren und/oder äußeren Fläche einer seiner seitlichen Wandungen vertikale Nuten (12) aufweist, um die Zirkulation von Luft in dem genannten Kasten (1) zu erleichtern.

7. Behälter für den Trockentransport von lebenden Fischen nach einem der Ansprüche 1 bis 6,
**dadurch gekennzeichnet, daß** er außer wenigstens einem Kasten eine Umverpackung des Kastens oder der Kästen aufweist, die die Form einer biegsamen Umhüllung aufweist, die den Kasten oder die Mehrzahl von Kästen umschließt, die in Form wenigstens eines Stapels gestapelt sind, wobei diese Umhüllung abdichtbar ist, um im Inneren der genannten Umhüllung eine kontrollierte Atmosphäre aufrechtzuerhalten.

8. Behälter für den Trockentransport von lebenden Fischen nach einem der Ansprüche 1 bis 7,
**dadurch gekennzeichnet, daß** er ferner ein Halteelement (9) aufweist, das auf einer Palette (10) angeordnet ist, wobei das genannte Halteelement (9) einen Kasten oder eine Mehrzahl von Kästen (10) umschließt, die in Form wenigstens eines Stapels gestapelt sind.

9. Verfahren zur Konditionierung von lebenden Plattfischen im Hinblick auf deren Trockentransport mittels eines Behälters nach einem der Ansprüche 1 bis 8,
**dadurch gekennzeichnet, daß** auf dem Boden eines Kastens (1), der mit Eis beaufschlagt ist, wenigstens ein, vorzugsweise zwei Fische, im allgemeinen nüchtern, angeordnet wird bzw. werden, daß auf dem Boden eines Halteteiles (9), das durch eine Palette (10) getragen wird, eine biegsame, wasserdichte Umhüllung angeordnet wird und daß im Inneren der genannten Umhüllung ein Kasten oder eine Mehrzahl von Kästen (1) angeordnet wird, die in Form eines Stapels oder mehrerer Stapel angeordnet sind, daß vor oder nach dem dichten Verschließen der genannten Umhüllung Sauerstoff in die Umhüllung eingebracht wird und daß das Halteelement (9) geschlossen wird, das umdie genannte Umhüllung herum angeordnet ist.
